Europäisches Patentamt

European Patent Office

Office européen des brevets

(11) Numéro de publication: **0 222 660**
**A1**

# (12) DEMANDE DE BREVET EUROPEEN

(21) Numéro de dépôt: 86402426.0

(22) Date de dépôt: 29.10.86

(51) Int. Cl.⁴: **B 29 C 53/60**
**F 16 C 3/02**

(30) Priorité: 14.11.85 FR 8516842

(43) Date de publication de la demande:
20.05.87 Bulletin 87/21

(84) Etats contractants désignés:
AT BE CH DE FR GB IT LI NL SE

(71) Demandeur: SPIFLEX S.A.
23 Avenue de Neuilly
F-75116 Paris (FR)

(72) Inventeur: Chabrier, Gilbert
7 rue Bastienne
F-95160 Montmorency (FR)

(74) Mandataire: Bouju, André
Cabinet Bouju 38 avenue de la Grande Armée
F-75017 Paris (FR)

(54) Procédé pour renforcer un élément cylindrique aux efforts de torsion et élément cylindrique s'y rapportant.

(57) Le procédé permet de renforcer un élément cylindrique (1) destiné à supporter un couple de torsion.

On enroule hélicoïdalement et sous tension autour de l'élément cylindrique (1) un profilé (2) en formant successivement des enroulements dans un sens ($F_1$) et dans un sens opposé ($F_2$). La tension exercée sur le profilé (2) est calculée pour qu'un enroulement (2a, 2c) réalisé dans le sens ($F_1$) exerce sur l'élément cylindrique (1) un couple de torsion égal et de sens opposé à celui exercé par l'enroulement (2b, 2d) réalisé dans l'autre sens ($F_2$), la somme de ces couples étant au moins égale au couple maximum susceptible de s'exercer sur l'élément cylindrique (1) de façon que les enroulements en sens opposé au couple appliqué ne soient jamais en compression et que l'élément cylindrique soit en torsion nulle.

Utilisation notamment pour réaliser un arbre de transmission à faible angle de torsion et de poids réduit.

FIG.1

## Description

"Procédé pour renforcer un élément cylindrique aux efforts de torsion et élément cylindrique s'y rapportant"

La présente invention concerne un procédé pour renforcer un élément cylindrique destiné à supporter un couple de torsion tel qu'un arbre de transmission.

L'invention vise également l'élément cylindrique présentant une résistance renforcée à la torsion, pouvant être fabriqué selon le procédé précité.

Les arbres de transmission comprennent un élément cylindrique plein ou creux tel qu'un tube métallique généralement en acier, qui est soumis, lorsqu'il est en service, à un couple de torsion engendrant des efforts de cisaillement dans cet élément cylindrique.

Suivant les caractéristiques du matériau constituant l'élément cylindrique, et la valeur de la torsion, celui-ci subit un angle de torsion plus ou moins important.

Pour que l'arbre de transmission résiste aux efforts de cisaillement, tout en présentant un angle de torsion limité sous l'effet du couple maximum suceptible de s'exercer sur l'élément cylindrique, celui-ci doit présenter une épaisseur et un diamètre suffisants. En conséquence, lorsque cet élément cylindrique est accouplé à un moteur présentant un couple maximum important, il est relativement lourd et encombrant.

Par ailleurs, plus le poids des arbres de transmission est élevé, plus l'équilibre dynamique de ceux-ci doit être soigné pour éviter les vibrations, et des paliers intermédiaires peuvent être nécessaires.

Pour ces raisons, il est souhaitable d'alléger le plus possible les arbres de transmission, sans pour autant réduire leur capacité à supporter et transmettre les couples.

Le but de l'invention est précisément d'atteindre cet objectif, en fournissant un procédé pour renforcer un élément cylindrique tel qu'un arbre de transmission destiné à supporter un couple de torsion, tout en limitant son diamètre et/ou son poids ainsi que l'angle de torsion.

Suivant l'invention, ce procédé est caractérisé en ce que qu'on enroule hélicoïdalement et sous tension prédéterminée autour de cet élément cylindrique un profilé composite de faible section en formant un premier enroulement hélicoïdal tout autour de l'élément cylindrique et dans un sens déterminé, puis on effectue un second enroulement de sens opposé de façon que ce second enroulement se croise symétriquement avec le premier enroulement, puis on inverse à nouveau le sens de l'enroulement pour obtenir un troisième enroulement de même sens et parallèle avec le premier enroulement, et ainsi de suite. On poursuit l'opération jusqu'à recouvrir toute la surface de l'élément cylindrique par un nombre entier d'enroulements dans un sens égal au nombre d'enroulements dans le sens opposé, la tension exercée sur le profilé etant telle qu'un enroulement réalisé dans un sens exerce sur l'élément cylindrique un faible couple de torsion égal et de sens opposé à celui exercé par l'enroulement réalisé dans l'autre sens, la somme de ces couples étant au moins égale au couple maximum susceptible de s'exercer sur l'élément cylindrique de façon que les enroulements opposés au couple ne soient jamais en compression et que la contrainte admissible dans le profilé ne soit pas dépassée.

Le couple de torsion exercé par les enroulements du profilé réalisés dans un sens, équilibre par conséquent celui exercé par les enroulements du profilé réalisés dans l'autre sens, et l'élément cylindrique support est soumis à une torsion nulle.

Lorsqu'un couple est appliqué à l'élément cylindrique, ce couple induit dans les enroulements réalisés dans le même sens que ce couple, des contraintes de tension qui s'opposent à la torsion de l'élément cylindrique et dans les enroulements réalisés en sens contraire il provoque une diminution de la tension, la différence des deux étant égale au couple appliqué.

On limite ainsi l'angle de torsion de cet élément cylindrique. On peut ainsi réduire le diamètre de cet élément cylindrique ou son épaisseur dans le cas d'un élément tubulaire, de façon à l'alléger.

Selon une version avantageuse de l'invention, on inverse l'angle suivant lequel le profilé est enroulé sur l'élément cylindrique chaque fois que l'on passe d'un enroulement dans un sens à un enroulement dans un sens opposé de façon que les enroulements dans un sens se croisent symétriquement par rapport à une génératrice de l'élément cylindrique avec les enroulements dans un sens opposé.

De plus, du fait de la tension de pose du profilé, chaque enroulement exerce sur l'élément cylindrique une contrainte circonférentielle et une contrainte longitudinale qui augmente à chaque enroulement. Par contre, la contraite de torsion due à enroulement est constante et devient nulle à l'arrêt de l'enroulement en raison de l'équilibre entre les enroulements opposés en nombre égal. La résultante de ces contraintes se traduit par une compression circonférentielle et une compression axiale qui n'engendrent aucune torsion dans l'élément cylindrique. Ces compressions ne sont pas modifiées lors de l'application d'un couple inférieur au couple maximum désigné, car l'augmentation de tension dans un sens est compensée par une diminution de même valeur dans l'autre sens.

De préférence, l'angle suivant lequel le profilé est enroulé autour de l'élément cylindrique est égal à plus ou moins 45° par rapport à l'axe du tube.

Cet angle est optimal lorsque l'élément cylindrique doit supporter uniquement des efforts de torsion. Cet angle peut toutefois être plus faible ou plus fort que 45° dans le cas où le tube doit faire face également à des efforts de flexion ou à une pression interne en plus des efforts de torsion.

Selon un autre aspect de l'invention, l'élément cylindrique tel qu'un arbre de transmission destiné à supporter un couple de torsion réalisé selon le procédé de l'invention est renforcé par des enroulements d'un profilé constitué par des fibres continues noyées dans une résine, ces fibres s'étendant dans la direction du profilé.

Ce profilé composite fibre-résine est par exemple fabriqué selon le procédé décrit dans le brevet français n° 2516441.

Un tel profilé est remarquable à la fois par sa grande souplesse, sa faible masse spécifique et par sa forte résistance à la rupture et son module d'élasticité élevé, de sorte qu'il est particulièrement indiqué pour la présente application.

D'autres particularités et avantages de l'invention apparaîtront encore dans la description ci-après.

Aux dessins annexés, donnés à titre d'exemples non limitatifs :

  - la figure 1 est une vue en plan avec arrachement d'un élément cylindrique constituant un arbre de transmission, illustrant la mise en oeuvre du procédé selon l'invention.

  - la figure 2 est une vue développée sur le plan de la figure, de l'élément cylindrique, montrant dans sa partie gauche l'équilibre des contraintes en l'absence de couple et dans sa partie droite l'état des contraintes sous l'effet d'un couple.

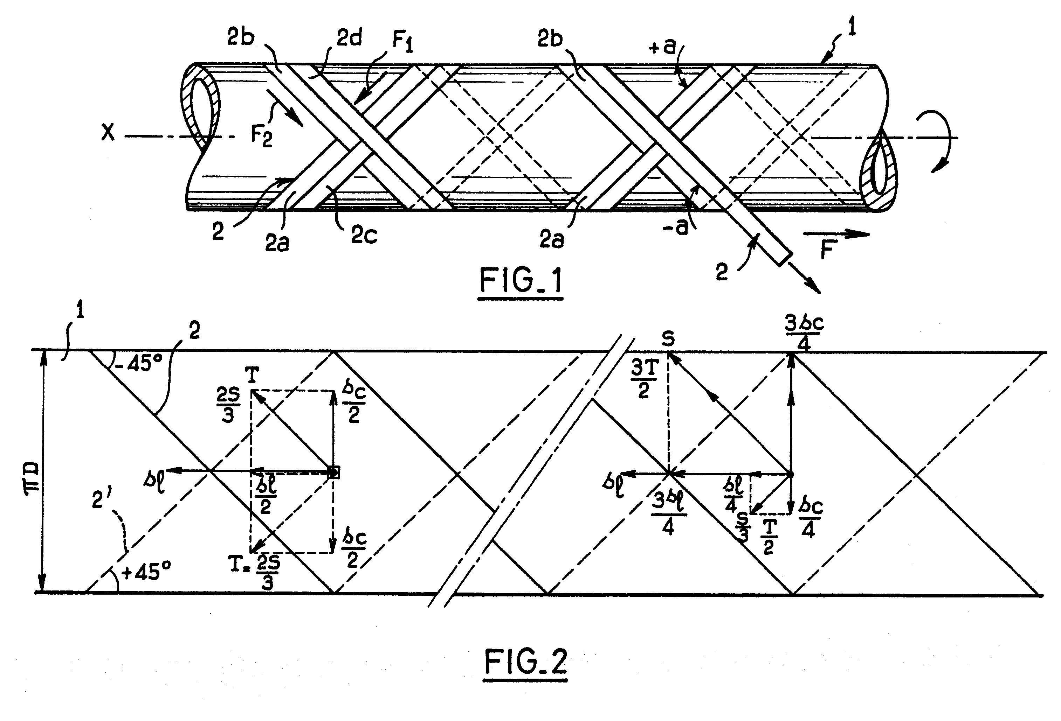

La figure 1 illustre le procédé selon l'invention pour renforcer un élément cylindrique 1, par exemple tubulaire et en métal, destiné à supporter un couple de torsion. Cet élément cylindrique 1 peut être par exemple un arbre de transmission pour véhicule automobile.

Selon ce procédé, on enroule hélicoïdalement et sous tension prédéterminée autour de cet élément cylindrique 1 un profilé 2 en formant un premier enroulement hélicoïdal 2a tout autour de l'élément cylindrique et dans un sens $F_1$ déterminé, puis on effectue un second enroulement 2b de sens opposé $F_2$ de façon que ce second enroulement se croise avec le premier enroulement ; on inverse ensuite le sens de l'enroulement pour obtenir un enroulement 2c jointif avec le premier enroulement 2a ou séparé de l'enroulement 2a par un intervalle égal à un nombre entier de profilés, après quoi on inverse à nouveau le sens de l'enroulement pour obtenir un enroulement 2d jointif avec le second enroulement 2b ou séparé de l'enroulement 2b par un intervalle égal à un nombre entier de profilés. On poursuit ainsi l'opération jusqu'à recouvrir toute la surface de l'élément cylindrique par un nombre d'enroulements dans un sens $F_1$ égal au nombre d'enroulements dans le sens opposé $F_2$.

Pour réaliser les enroulements précités, on fait tourner l'élément cylindrique 1 autour de son axe X-X' et on déplace latéralement le profilé 2 à l'aide de moyens en eux-mêmes connus, parallèlement à l'axe de l'élément cylindrique 1 (voir flèche F sur la figure 1).

La tension exercée sur le profilé 2 est telle que les enroulements 2a, 2c réalisés dans le sens des flèches $F_1$ exercent sur l'élément cylindrique 1 un couple de torsion égal et de sens opposé à celui exercé par les enroulements 2b, 2d qui sont réalisés dans l'autre sens $F_2$, et elle est calculée pour que la somme de ces couples soit au moins égale au couple maximum susceptible de s'exercer sur l'élément cylindrique 1.

Pour que cette condition soit réalisée, il faut évidemment que le nombre des enroulements ayant un sens donné tel que $F_1$ soit égal au nombre des enroulements ayant un sens inverse tel que $F_2$.

Bien entendu, il convient que l'élément cylindrique 1 résiste aux contraintes circonférentielle et longitudinale de compression induites par les enroulements sous tension du profilé 2, sans dépasser sa contrainte admissible.

De même, la tension exercée sur ce profilé 2 devra être inférieure à sa contrainte maximale admissible, de façon que ce profilé 2 puisse accepter la contrainte de tension supplémentaire engendrée lors de l'application du couple maximum sur l'élément cylindrique 1 sans dépasser cette contrainte admissible.

Comme on le voit sur la figure 1, on inverse l'angle a suivant lequel le profilé est enroulé sur l'élément cylindrique 1, chaque fois que l'on passe d'un enroulement 2a, 2c dans le sens $F_1$ à un enroulement 2b, 2d dans le sens opposé $F_2$ de façon que les enroulements des profilés dans un sens se croisent symétriquement par rapport à une génératrice de l'élément cylindrique avec les enroulements dans un sens opposé.

Dans l'exemple représenté sur les figures 1 et 2, l'angle a suivant lequel le profilé 2 est enroulé autour de l'élément cylindrique 1 est égal à plus ou moins 45°, angle qui est considéré comme optimal dans le cadre de l'application considérée par la présente invention.

La nature des profilés, le nombre des couches de ces enroulements et leur épaisseur totale sont définis en fonction du couple de torsion destiné à être appliqué à l'élément cylindrique 1. Ces grandeurs peuvent être calculées aisément à partir des caractéristiques mécaniques connues du profilé, et en particulier de sa limite élastique ainsi que de celles de l'élément cylindrique.

Bien entendu, les enroulements du profilé sont fixés au moins aux extrémités de l'élément cylindrique 1. Cette fixation peut être réalisée par serrage mécanique, soudage ou collage suivant la nature du matériau constituant le profilé 2.

Ce profilé 2 est de préférence réalisé à partir de fibres continues telles que et non limitativement des fibres de verre, de carbone, d'aramide, noyées dans une résine thermoplastique telle qu'une résine polyamide. Ce profilé 2 est de préférence obtenu selon le procédé décrit dans le brevet français n° 2516441.

La fixation d'un tel profilé composite fibres-résine aux extrémités de l'élément cylindrique 1 ou sur la totalité de la surface de celui-ci peut être réalisée facilement par soudage thermoplastique, c'est-à-dire en chauffant le profilé composite pendant son enroulement sur l'élément cylindrique 1 à une température suffisante pour obtenir la fusion superficielle de la surface du profilé destinée à être appliquée sur l'élément cylindrique 1, lui-même enduit préalablement à chaud de la même résine thermoplastique. Cette technologie est décrite dans le brevet français n° 2 491 044.

On va maintenant exposer, en référence à la figure 2. les effets et avantages techniques du procédé selon l'invention et de l'élément cylindrique renforcé obtenu par ce procédé.

Sur cette figure 2, on a représenté de façon développée sur un plan, un tube en acier 1 de diamètre égal à D et de circonférence égale à πD.

Les enroulements successifs du profilé 2 ont été réalisés avec un angle a égal à plus 45° pour les couches 2' par exemple de nombre impair (représentées en pointillés sur la figure 2) et égal à moins 45° pour les couches 2 de nombre pair (représentées en trait plein sur la figure).

On supposera que les profilés 2 et 2' ont été enroulés sur le tube cylindrique 1 sous une tension telle que la contrainte résultante T dans le profilé soit égale aux 2/3 de la contrainte maximale admissible S dans ce profilé : T = 2S/3.

L'épaisseur des enroulements est calculée de façon à résister au couple $M_t$ avec une contrainte égale à S. Lorsqu'on applique le couple $M_t$ au tube 1, on développe dans les profilés 2 une contrainte supplémentaire égale à T/2 et une diminution de contrainte égale à T/2 dans les profilés 2'. La différence de contrainte entre les enroulements 2 et 2' est donc égale à 3T/2 - T/2 = T correspondant à un couple de valeur $M_t$ qui s'oppose au couple appliqué et l'équilibre.

La contrainte dans l'enroulement 2 est alors égale à 3/2 × 2S/3 = S, contrainte admissible dans le profilé.

On constate sur la figure 2 que les composantes longitudinales et circonférentielles de T, dans chaque enroulement, sl/2 et sc/2 donnent dans les deux situations une compression longitudinale égale à sl et une compression radiale égale à sc.

Ces contraintes dans l'élément cylindrique permettent de le dimensionner suivant les règles classiques de la résistance des matériaux. D'autre part, le fait d'obtenir la précontrainte de torsion par la succession de multiples enroulements à faible section qui s'équilibrent deux à deux, permet d'utiliser un élément cylindrique de faible résistance en torsion, donc léger.

Si les enroulements avaient été réalisés sans tension, la contrainte engendrée sur l'un des enroulements sous l'effet d'un couple $M_t$ aurait été égale à T, provoquant un angle de torsion double de la valeur obtenue dans le cas d'enroulements réalisés sous tension, conformément à l'invention et les enroulements de sens opposé auraient été en compression avec risque de flambage des fibres.

Par conséquent, grâce au procédé selon l'invention, il est possible de réduire de moitié l'angle de torsion du tube 1 par rapport à ce qu'il aurait été dans le cas d'enroulements sans tension.

L'élément cylindrique ainsi renforcé suivant l'invention se comporte donc d'une façon totalement différente d'un arbre classique en métal ou en matériaux composites puisque le couple appliqué est absorbé par un effort de traction différentielle dans les enroulements composites et des efforts de compression longitudinale et circonférentielle dans l'élément cylindrique support avec une contrainte réduite de torsion due à un angle de torsion de moitié et une valeur élevée du module de traction du composite, comparée à celle du module de torsion de l'élément cylindrique.

Le fait de pouvoir réduire l'angle de torsion d'un arbre de transmission présente une importance dans certaines applications telles que les robots de manipulation de charges.

D'autre part, l'invention permet pour un couple maximum donné, de réduire le diamètre et surtout le poids d'un arbre de transmission, comme le montre l'exemple numérique ci-après.

Pour la transmission d'un couple de 400 mN, il est nécessaire d'utiliser un tube d'acier dont la résistance à la rupture est de 800 MPa ayant un diamètre extérieur de 29 mm et un diamètre intérieur de 23 mm, soit une épaisseur de 3 mm et pesant 1 923 g par mètre de longueur.

Suivant le procédé conforme à l'invention, le même couple de 400 mN peut être transmis par un tube en acier de résistance identique, de diamètre extérieur égal à 27 mm et de diamètre intérieur égal à 25 mm, soit une épaisseur de 1 mm recouvert par un enroulement d'épaisseur égale à 1,5 mm réalisé au moyen d'un profilé en fibres de Kevlar noyées dans une résine polyamide, tube et enroulement pesant au total 830 g/m de longueur.

Le fait de pouvoir réduire le poids et/ou le diamètre de l'arbre de transmission permet non seulement d'alléger le véhicule ou l'installation équipée d'un tel arbre de transmission et d'en augmenter ainsi les performances, mais également de réduire les difficultés posées par l'obtention d'un parfait équilibre dynamique d'un arbre de transmission de fort diamètre et tournant à grande vitesse, ce qui conduit souvent à la suppression d'un ou plusieurs paliers intermédiaires.

## Revendications

1. Procédé pour renforcer un élément cylindrique (1) aux efforts de torsion, tel qu'un arbre de transmission, caractérisé en ce qu'on enroule hélicoïdalement et sous tension prédéterminée autour de cet élément cylindrique (1) un profilé composite (2) en formant un premier enroulement hélicoïdal (2a) tout autour de l'élément cylindrique et dans un sens ($F_1$) déterminé, puis on effectue un second enroulement (2b) de sens opposé ($F_2$) de façon que ce second enroulement se croise avec le premier enroulement de façon symétrique, puis on inverse le sens de l'enroulement pour obtenir un enroulement (2c) parallèle avec le premier enroulement (2a), après quoi on inverse à nouveau le sens de l'enroulement pour obtenir un enroulement (2d) parallèle avec le second enroulement (2b) et on poursuit l'opération jusqu'à recouvrir toute la surface de l'élément cylindrique par une double couche entrelacée constituée d'un nombre d'enroulements dans un sens ($F_1$) égal au nombre d'enroulements dans le sens opposé ($F_2$), la tension exercée sur le profilé (2) étant telle que les enroulements réalisés dans un sens ($F_1$) exercent sur l'élément cylindrique (1) un couple de torsion égal et de sens opposé à celui exercé par les enroulements réalisés dans l'autre sens (F2), de façon que l'enroulement opposé au couple appliqué ne soit jamais en compression et que l'élément cylindrique soit en état de torsion nulle lorsque tous les enroulements ont été achevés, le nombre de couches étant déterminé de façon que le couple induit par la somme de ces enroulements soit au moins égal au couple maximum susceptible de s'exercer sur l'élément cylindrique sans dépasser la contrainte admissible dans le profilé composite qui travaille en tension, ni la contrainte admissible dans le corps cylindrique de base qui travaille en compression.

2. Procédé conforme à la revendication 1, caractérisé en ce qu'on inverse l'angle (a) suivant lequel le profilé (2) est enroulé sur l'élément cylindrique (1) chaque fois que l'on passe d'un enroulement (2a, 2c) dans un sens (F1) à un enroulement (2b, 2d) dans un sens opposé (F2) de façon que les enroulements dans un sens se croisent symétriquement par rapport à une génératrice de l'élément cylindrique (1) avec les enroulements dans un sens opposé.

3. Procédé conforme à la revendication 2, caractérisé en ce que l'angle (a) suivant lequel le profilé (2) est enroulé autour de l'élément cylindrique est en plus égal à plus ou moins 45° par rapport à l'axe du tube.

4. Procédé conforme à l'une des revendications 1 à 3, caractérisé en ce que la tension exercée sur le profilé lors de l'enroulement, est calculée de façon que ce profilé (2) puisse accepter la contrainte de tension supplémentaire engendrée lors de l'application du couple maximum sur l'élément cylindrique 1, sans qu'il y ait dépassement de la contrainte admissible.

5. Procédé conforme à l'une des revendications 1 à 4, caractérisé en ce qu'on fixe chaque enroulement du profilé (2) au moins aux extrémités de l'élément cylindrique (1).

6. Procédé conforme à l'une des revendications 1 à 4, caractérisé en ce que le profilé composite de renforcement est constitué de fibres parallèles et continues noyées dans une matrice en résine thermoplastique.

7. Procédé conforme à l'une des revendications 1 à 4 et 6, caractérisé en ce que le profilé est fixé au corps cylindrique et à lui-même par thermosoudage effectué simultanément à l'enroulement sous tension.

8. Elément cylindrique (1) destiné à supporter un couple de torsion, réalisé selon le procédé conforme à l'une des revendications 1 à 7, caractérisé en ce qu'il est renforcé par des enroulements (2a, 2b, 2c, 2d, ...) d'un profilé (2) constitué par des fibres continues, noyées dans une résine, ces fibres s'étendant dans la direction du profilé, et la résine étant thermoplastique.

0222660

FIG.1

FIG.2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | US-A-3 553 978  (WILLIAMS)<br>* Colonne 2, lignes 22-35,48-69; colonne 3, lignes 4-10; revendications 1-3; figures 1,4 * | 1-8 | B 29 C   53/60<br>F 16 C    3/02 |
| Y | FR-A-  337 233  (DE ALBERTIS)<br>* Page 1, lignes 19-24,40-57; page 2, lignes 4-13,97-104; fig-ures 3,5 * | 1-8 | |
| A,D | FR-A-2 491 044<br>(SPIE-BATIGNOLLES)<br>* Page 1, lignes 4-18; page 3, lignes 5-16; page 10, lignes 30-36;          revendications 1,2,4-7,10,11,13; figure 7 * | 1-8 | |
| A | GB-A-2 149 061  (AGUSTA)<br>* Résumé; page 1, lignes 4-14 * | 1-8 | **DOMAINES TECHNIQUES RECHERCHES (Int. Cl.4)**<br><br>B 29 C<br>F 16 C |
| A | GB-A-2 146 097  (WESTLAND)<br>* Figure 2 * | 1-8 | |
| A | EP-A-0 145 810  (SCHNELL)<br><br>* Page 1, lignes 1-23;  page 11, lignes         4,5,9,17-20,36-38; revendications 1-3 * | 1-3,5, 6,8 | |

                                   ---          -/-

Le présent rapport de recherche a été établi pour toutes les revendications

| Lieu de la recherche | Date d'achèvement de la recherche | Examinateur |
|---|---|---|
| LA HAYE | 23-01-1987 | KUHN E.F.E. |

# RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| A | US-A-4 331 497 (GILMAN et al.)<br><br>* Résumé; colonne 5, lignes 10-12; figure 1 *<br><br>----- | 1-3,6-8 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 23-01-1987 | KUHN E.F.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou apres cette date
D : cité dans la demande
L : cité pour d'autres raisons

& : membre de la même famille, document correspondant

OEB Form 1503 03 82